# EUROPEAN PATENT APPLICATION

(11) **EP 4 797 564 A1**
(43) Date of publication of application: **26.08.2026**
(21) Application number: 24887949.6
(22) Date of filing: 05.11.2024
(51) Int. Cl.: H04B 7/185

(54) **COMMUNICATION METHOD AND COMMUNICATION APPARATUS**

(30) Priority: 10.11.2023 CN 202311502861
(71) Applicant: HUAWEI TECHNOLOGIES CO., LTD., Shenzhen 518129 (CN)
(72) Inventor: DENG, Taoyu, Shenzhen, Guangdong 518129 (CN); LI, Yongcui, Shenzhen, Guangdong 518129 (CN); LI, Yan, Shenzhen, Guangdong 518129 (CN)
(74) Representative: Körber, Martin Hans
(86) International application number: PCT/CN2024/129977
(87) International publication number: WO 2025/098337

(57) **Abstract**

This application provides a communication method and a communication apparatus, and may be applied to a non-terrestrial communication network, for example, a satellite network, an uncrewed aerial vehicle platform, or a high-altitude platform. In the method, a source access network device determines, by using at least one of the following information: information of a transmission path between the source access network device and a target access network device, time information, or location information of the source access network device, to hand over a terminal device to the target access network device in a handover manner based on an interface between access network devices or in a handover manner based on an interface between an access network device and a core network device, so that a handover latency of the terminal device can be reduced.

## Description

This application claims priority to Chinese Patent Application No. 202311502861.5, filed with the China National Intellectual Property Administration on November 10, 2023 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

A non-terrestrial network (non-terrestrial network, NTN) includes a satellite network, a high-altitude platform, an uncrewed aerial vehicle, and the like. Together with a mobile communication system, the non-terrestrial network forms an integrated and comprehensive global communication network seamlessly covering sea, land, air, space, and ground, to meet the requirements of various services.

In the NTN, a satellite node may perform a mobility management procedure of user equipment (user equipment, UE) within coverage of the satellite node in a plurality of handover manners. How to select a proper handover manner becomes an urgent problem to be resolved.

### SUMMARY

This application provides a communication method and a communication apparatus, so that a proper handover manner can be selected for a terminal device, and a handover latency can be reduced.

According to a first aspect, a communication method is provided. The method may be performed by a source access network device, or may be performed by a module (for example, a chip or a circuit) of the source access network device, or may be performed by a logical node, a logical module, or software that can implement all or some functions of the source access network device. This is not limited in this application. An example in which the method is performed by a source access network device is used below for description.

The method includes: A source access network device determines, based on first information, to hand over a terminal device to a target access network device in a first handover manner, where the first handover manner is a handover manner based on an interface between access network devices or a handover manner based on an interface between an access network device and a core network device; and hands over the terminal device to the target access network device based on the first handover manner, where the first information includes at least one of the following: information of a transmission path between the source access network device and the target access network device, time information, or location information of the source access network device.

According to the foregoing solution, the handover manner of handing over the terminal device to the target access network device is determined based on the at least one of the information of the transmission path between the source access network device and the target access network device, the time information, or the location information of the source access network device; and the terminal device is handed over to the target access network device based on the handover manner, so that a handover latency of the terminal device can be reduced.

For example, the interface between the access network devices is an Xn interface, and the interface between the access network device and the core network device is an N2 interface.

With reference to the first aspect, in some implementations of the first aspect, the handover manner based on the interface between the access network devices is Xn-based handover; or the handover manner based on the interface between the access network device and the core network device is N2-based handover.

With reference to the first aspect, in some implementations of the first aspect, the information of the transmission path includes at least one of the following: a hop count of the transmission path, a latency of the transmission path, and a distance of the transmission path.

According to the foregoing solution, when it is determined to hand over the terminal device to the target access network device through Xn-based handover or N2-based handover, the at least one of the hop count, the latency, or the distance of the transmission path between source access network devices is considered, so that a proper handover manner can be selected to hand over the terminal device to the target access network device, and a handover latency of the terminal device can be reduced.

With reference to the first aspect, in some implementations of the first aspect, the source access network device determines the hop count of the transmission path based on ephemeris information and the time information; or the source access network device determines the hop count of the transmission path based on a topology structure of the transmission path.

According to the foregoing solution, the hop count of the transmission path between source access network devices may be determined by using the ephemeris information or the network topology structure of the transmission path, so that the source access network device can select, based on the hop count of the transmission path, a proper handover manner to hand over the terminal device to the target access network device, and a handover latency of the terminal device can be reduced.

With reference to the first aspect, in some implementations of the first aspect, the latency of the transmission path includes an Xn-based handover latency and/or an N2-based handover latency from the source access network device to the target access network device stored by the source access network device, or an Xn-based handover latency and/or an N2-based handover latency from the source access network device to the target access network device obtained by the source access network device through measurement.

According to the foregoing solution, the latency of the transmission path between source access network devices may be determined based on at least one of the Xn-based handover latency and/or the N2-based handover latency stored by the source access network device, or the Xn-based handover latency and/or the N2-based handover latency obtained through measurement, so that the source access network device can select, based on the latency of the transmission path, a proper handover manner to hand over the terminal device to the target access network device, and a handover latency of the terminal device can be reduced.

With reference to the first aspect, in some implementations of the first aspect, the source access network device measures the Xn-based handover latency and/or the N2-based handover latency from the source access network device to the target access network device.

With reference to the first aspect, in some implementations of the first aspect, the source access network device sends a measurement signal to the target access network device; the source access network device receives a response signal from the target access network device, where the response signal is sent based on the measurement signal; and the source access network device determines the Xn-based handover latency based on a moment at which the measurement signal is sent and a moment at which the response signal is received.

According to the foregoing solution, the Xn-based handover latency obtained by the source access network device through measurement may be used, so that a proper handover manner can be selected based on the Xn-based handover latency to hand over the terminal device to the target access network device, and a handover latency of the terminal device can be reduced.

With reference to the first aspect, in some implementations of the first aspect, the source access network device sends indication information to the target access network device, where the indication information indicates to measure an information transmission latency between the target access network device and the core network device; and the source access network device receives the N2-based handover latency from the source access network device to the target access network device obtained by the target access network device through measurement, where the N2-based handover latency is determined based on the information transmission latency.

According to the foregoing solution, the N2-based handover latency obtained by the source access network device through measurement may be used, so that a proper handover manner can be selected based on the N2-based handover latency to hand over the terminal device to the target access network device, and a handover latency of the terminal device can be reduced.

With reference to the first aspect, in some implementations of the first aspect, the source access network device sends a measurement signal to the core network device, where the measurement signal includes an identifier of the target access network device and a first timestamp; the source access network device receives a response signal from the core network device via the target access network device, where the response signal includes a second timestamp; and the N2-based handover latency from the source access network device to the target access network device is obtained through measurement based on the first timestamp and the first timestamp.

According to the foregoing solution, the N2-based handover latency obtained by the source access network device through measurement may be used, so that a proper handover manner can be selected based on the N2-based handover latency to hand over the terminal device to the target access network device, and a handover latency of the terminal device can be reduced.

With reference to the first aspect, in some implementations of the first aspect, when the latency of the transmission path includes the Xn-based handover latency and the N2-based handover latency from the source access network device to the target access network device measured by the source access network device, if the Xn-based handover latency is greater than the N2-based handover latency, it is determined that the first handover manner is a handover manner based on the interface between the access network device and the core network device; or if the Xn-based handover latency is less than or equal to the N2-based handover latency, it is determined that the first handover manner is a handover manner based on the interface between the access network devices.

According to the foregoing solution, the source access network device can determine, based on a value relationship between the Xn-based handover latency and the N2-based handover latency, a proper handover manner to hand over the terminal device to the target access network device, so that a handover latency of the terminal device can be reduced.

With reference to the first aspect, in some implementations of the first aspect, when the first information includes the time information, or the location information of the source access network device, the source access network device determines, based on the first information and a first correspondence, to hand over the terminal device to the target access network device in the first handover manner, where the first correspondence includes a correspondence between the time information and/or the location information and the handover manner.

According to the foregoing solution, the source access network device can determine, based on a current moment and/or location and the correspondence between the time information and/or the location information and the handover manner, a proper handover manner to hand over the terminal device to the target access network device, so that a handover latency of the terminal device can be reduced.

With reference to the first aspect, in some implementations of the first aspect, when the first information includes the information of the transmission path between the source access network device and the target access network device, the source access network device determines, based on the information of the transmission path and a threshold corresponding to the information of the transmission path, to hand over the terminal device to the target access network device in the first handover manner.

With reference to the first aspect, in some implementations of the first aspect, based on the information of the transmission path and the threshold corresponding to the information of the transmission path, the source access network device determines that the first handover manner is a handover manner based on the interface between the access network device and the core network device if the information of the transmission path is greater than the threshold corresponding to the information of the transmission path; or determines that the first handover manner is a handover manner between the access network devices if the information of the transmission path is less than or equal to the threshold corresponding to the information of the transmission path.

According to the foregoing solution, the source access network device can determine, based on the determined information of the transmission path and the threshold corresponding to the information of the transmission path, a proper handover manner to hand over the terminal device to the target access network device, so that a handover latency of the terminal device can be reduced.

With reference to the first aspect, in some implementations of the first aspect, when the handover manner is a handover manner based on the interface between the access network device and the core network device, the source access network device sends, through the interface, context information of the terminal device to the core network device.

With reference to the first aspect, in some implementations of the first aspect, when the handover manner is a handover manner based on the interface between the access network devices, the source access network device sends, through the interface, context information of the terminal device to the target access network device.

With reference to the first aspect, in some implementations of the first aspect, the source access network device and the target access network device are deployed on different satellites.

According to a second aspect, a communication apparatus is provided. The apparatus includes a processing unit. The processing unit is configured to determine, based on first information, to hand over a terminal device to a target access network device in a first handover manner, where the first handover manner is a handover manner based on an interface between access network devices or a handover manner based on an interface between an access network device and a core network device; and the processing unit is further configured to hand over the terminal device to the target access network device based on the first handover manner. The first information includes at least one of the following: information of a transmission path between the apparatus and the target access network device, time information, or location information of the apparatus.

For example, the interface between the access network devices is an Xn interface, and the interface between the access network device and the core network device is an N2 interface.

With reference to the second aspect, in some implementations of the second aspect, the handover manner based on the interface between the access network devices is Xn-based handover; or the handover manner based on the interface between the access network device and the core network device is N2-based handover.

With reference to the second aspect, in some implementations of the second aspect, the information of the transmission path includes at least one of the following: a hop count of the transmission path, a latency of the transmission path, and a distance of the transmission path.

With reference to the second aspect, in some implementations of the second aspect, the processing unit is further configured to: determine the hop count of the transmission path based on ephemeris information and the time information; or determine the hop count of the transmission path based on a topology structure of the transmission path.

With reference to the second aspect, in some implementations of the second aspect, the latency of the transmission path includes an Xn-based handover latency and/or an N2-based handover latency from the apparatus to the target access network device stored by the apparatus, or an Xn-based handover latency and/or an N2-based handover latency from the apparatus to the target access network device obtained by the processing unit through measurement.

With reference to the second aspect, in some implementations of the second aspect, the processing unit is further configured to measure the Xn-based handover latency and/or the N2-based handover latency from the apparatus to the target access network device.

With reference to the second aspect, in some implementations of the second aspect, the apparatus further includes a transceiver unit. The transceiver unit is configured to: send a measurement signal to the target access network device; and receive a response signal from the target access network device, where the response signal is sent based on the measurement signal; and the processing unit is specifically configured to determine the Xn-based handover latency based on a moment at which the measurement signal is sent and a moment at which the response signal is received.

With reference to the second aspect, in some implementations of the second aspect, the apparatus further includes a transceiver unit. The transceiver unit is configured to: send indication information to the target access network device, where the indication information indicates to measure an information transmission latency between the target access network device and the core network device; and receive the N2-based handover latency from the apparatus to the target access network device obtained by the target access network device through measurement, where the N2-based handover latency is determined based on the information transmission latency.

With reference to the second aspect, in some implementations of the second aspect, the apparatus further includes a transceiver unit. The transceiver unit is configured to: send a measurement signal to the core network device, where the measurement signal includes an identifier of the target access network device and a first timestamp; and receive a response signal from the core network device via the target access network device, where the response signal includes a second timestamp; and the processing unit is specifically configured to obtain the N2-based handover latency from the apparatus to the target access network device through measurement based on the first timestamp and the first timestamp.

With reference to the second aspect, in some implementations of the second aspect, when the latency of the transmission path includes the Xn-based handover latency and the N2-based handover latency from the apparatus to the target access network device obtained by the processing unit through measurement, the processing unit is specifically configured to: if the Xn-based handover latency is greater than the N2-based handover latency, determine that the first handover manner is a handover manner based on the interface between the access network device and the core network device; or if the Xn-based handover latency is less than or equal to the N2-based handover latency, determine that the first handover manner is a handover manner based on the interface between the access network devices.

With reference to the second aspect, in some implementations of the second aspect, when the first information includes the time information, or the location information of the apparatus, the processing unit is specifically configured to determine, based on the first information and a first correspondence, to hand over the terminal device to the target access network device in the first handover manner, where the first correspondence includes a correspondence between the time information and/or the location information and the handover manner.

With reference to the second aspect, in some implementations of the second aspect, when the first information includes the information of the transmission path between the apparatus and the target access network device, the processing unit is specifically configured to determine, based on the information of the transmission path and a threshold corresponding to the information of the transmission path, to hand over the terminal device to the target access network device in the first handover manner.

With reference to the second aspect, in some implementations of the second aspect, the processing unit is specifically configured to: if the information of the transmission path is greater than the threshold corresponding to the information of the transmission path, determine that the first handover manner is a handover manner based on the interface between the access network device and the core network device; or if the information of the transmission path is less than or equal to the threshold corresponding to the information of the transmission path, determine that the first handover manner is a handover manner based on the interface between the access network devices.

With reference to the second aspect, in some implementations of the second aspect, when the handover manner is a handover manner based on the interface between the access network device and the core network device, the processing unit is specifically configured to determine to send, through the interface, context information of the terminal device to the core network device.

With reference to the second aspect, in some implementations of the second aspect, when the handover manner is a handover manner based on the interface between the access network devices, the processing unit is specifically configured to determine to send, through the interface, context information of the terminal device to the target access network device.

According to a third aspect, a communication apparatus is provided. The apparatus includes a processor. The processor is coupled to a memory, and may be configured to execute instructions in the memory, to implement the method according to the first aspect and any one of the possible implementations of the first aspect.

Optionally, the apparatus further includes the memory. The memory and the processor may be separately deployed, or may be deployed in a centralized manner. Optionally, the apparatus further includes a communication interface, and the processor is coupled to the communication interface.

In an implementation, the communication interface may be a transceiver or an input/output interface.

In another implementation, the apparatus is an access network device, or a chip configured in the access network device, or may be a logical module or software that can implement all or some functions of the access network device. When the apparatus is a chip, the communication interface may be an input/output interface, an interface circuit, an output circuit, an input circuit, a pin, a related circuit, or the like on the chip or a chip system. The processor may alternatively be embodied as a processing circuit or a logic circuit.

Optionally, the transceiver may be a transceiver circuit. Optionally, the input/output interface may be an input/output circuit.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, but not limited to, a receiver, a signal output by the output circuit may be output to, but not limited to, a transmitter and transmitted by the transmitter, and the input circuit and the output circuit may be a same circuit, where the circuit is used as the input circuit and the output circuit at different moments. Specific implementations of the processor and various circuits are not limited in embodiments of this application.

According to a fourth aspect, a communication apparatus is provided. The apparatus includes a logic circuit and an input/output interface. The logic circuit is coupled to the input/output interface, and is configured to transmit data through the input/output interface, to perform the method according to first aspect and any one of the possible implementations of the first aspect.

In an implementation, the apparatus is an access network device, or a chip configured in the access network device, or may be a logical module or software that can implement all or some functions of the access network device. When the apparatus is a chip, the communication interface may be an input/output interface, an interface circuit, an output circuit, an input circuit, a pin, a related circuit, or the like on the chip or a chip system. The processor may alternatively be embodied as a processing circuit or a logic circuit.

According to a fifth aspect, this application provides a chip system, including: a processor. The processor is configured to execute a computer program or instructions in a memory, to cause the chip system to implement the method according to first aspect or the possible implementations in the first aspect.

According to a sixth aspect, this application provides a communication system, including an access network device. The access network device is configured to perform the method according to first aspect or the possible implementations of the first aspect.

According to a seventh aspect, a computer-readable storage medium is provided. The computer-readable storage medium stores a computer program (or may also be referred to as code or instructions). When the computer program is run on a computer, the computer is caused to perform the method according to the first aspect and the possible implementations of the first aspect.

According to an eighth aspect, a computer program product is provided. The computer program product includes a computer program (or may also be referred to as code or instructions). When the computer program is run, a computer is caused to perform the method according to the first aspect and the possible implementations of the first aspect.

For beneficial effects of the second aspect to the eighth aspect, refer to descriptions of beneficial effects of the first aspect and the second aspect. Details are not described herein again.

### BRIEF DESCRIPTION OF DRAWINGS

FIG. 1 is a diagram of a system architecture;
FIG. 2 is a diagram of an NTN system architecture;
FIG. 3 is a diagram of two-dimensional expansion of a polar orbit constellation;
FIG. 4 is a schematic flowchart of Xn-based handover;
FIG. 5 is a schematic flowchart of a communication method 500 according to an embodiment of this application;
FIG. 6 is a schematic flowchart of a communication method 600 according to an embodiment of this application;
FIG. 7 is a schematic flowchart of a communication method 700 according to an embodiment of this application;
FIG. 8 is a diagram of a structure of a communication apparatus according to an embodiment of this application;
FIG. 9 is a diagram of a structure of another communication apparatus according to an embodiment of this application; and
FIG. 10 is a diagram of a structure of still another communication apparatus according to an embodiment of this application.

### DESCRIPTION OF EMBODIMENTS

The following describes technical solutions of this application with reference to accompanying drawings.

The technical solutions provided in this application may be applied to various communication systems, for example, a 5th generation (5th generation, 5G) or new radio (new radio, NR) system, a long-term evolution (long-term evolution, LTE) system, an LTE frequency division duplex (frequency division duplex, FDD) system, or an LTE time division duplex (time division duplex, TDD) system. The technical solutions provided in this application may be further applied to a future communication system, for example, a 6th generation mobile communication system. The technical solutions provided in this application may be further applied to a device-to-device (device-to-device, D2D) communication system, a vehicle-to-everything (vehicle-to-everything, V2X) communication system, a machine-to-machine (machine-to-machine, M2M) communication system, a non-terrestrial network (non-terrestrial network, NTN) communication system, a machine type communication (machine type communication, MTC) system, an internet of things (internet of things, IoT) communication system, or another communication system.

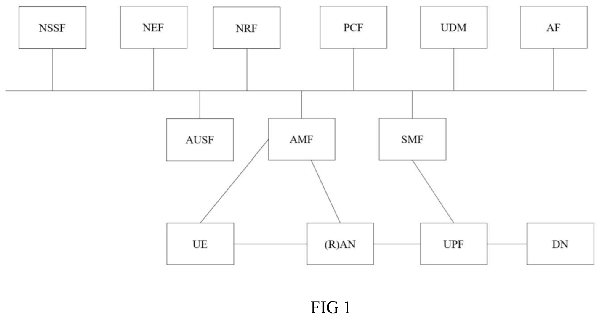

FIG. 1 is a diagram of a network architecture. As shown in FIG. 1, an example in which the network architecture is a 5G system (5th generation system, 5GS) is used. The network architecture may include but is not limited to a network slice selection function (network slice selection function, NSSF), an authentication server function (authentication server function, AUSF), unified data management (unified data management, UDM), a network exposure function (network exposure function, NEF), a network repository function (NF repository function, NRF), a policy control function (policy control function, PCF), an application function (application function, AF), an access and mobility management function (access and mobility management function, AMF), a session management function (session management function, SMF), user equipment (user equipment, UE), a radio access network device, a user plane function (user plane function, UPF), and a data network (data network, DN).

The DN may be the internet. The NSSF, the AUSF, the UDM, the NEF, the NRF, the PCF, the AF, the AMF, the SMF, and the UPF are network elements in a core network. Because the 5G system is used as an example in FIG. 1, the core network may be referred to as a 5G core network (5G core network, 5GC or 5GCN).

The following briefly describes the network elements shown in FIG. 1.
1. UE may be referred to as a terminal device, an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides a user with voice/data. For example, the terminal device may be a hand-held device or an in-vehicle device with a wireless connection function. Currently, some examples of the terminal are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a hand-held device with a wireless communication function, a computing device or another processing device connected to a wireless modem, a wearable device, a terminal device in a 5G network, a terminal device in a future evolved public land mobile network (public land mobile network, PLMN), or the like. This is not limited in embodiments of this application.

In an example instead of a limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, an intelligent wearable device includes a full-featured and large-sized device that can implement all or some functions without relying on a smartphone, for example, a smart watch or smart glasses, and a device that is dedicated to only one specific type of application function and needs to work with another device, for example, a smartphone, for example, various smart bands or smart jewelry for monitoring physical signs.

In addition, in embodiments of this application, the terminal device may alternatively be a terminal device in an IoT system. The IoT is an important part of future development of information technologies. A main technical feature of the IoT is connecting a thing to a network through a communication technology, to implement an intelligent network for interconnection between a person and a machine or between things.

It should be noted that, the terminal device and an access network device may communicate with each other by using a specific air interface technology (for example, an NR technology or an LTE technology). Terminal devices may also communicate with each other by using a specific air interface technology (for example, an NR technology or an LTE technology).

In embodiments of this application, an apparatus configured to implement a function of a terminal device may be the terminal device, or may be an apparatus that can support the terminal device in implementing the function, for example, a chip system or a chip. The apparatus may be installed in the terminal device. In this embodiment of this application, the chip system may include a chip, or may include a chip and another discrete component.

2. A (radio) access network ((radio) access network, (R)AN) node may provide a function of accessing a communication network for an authorized user in a specific area, and may specifically include a wireless network device in a 3rd generation partnership project (3rd generation partnership project, 3GPP) network, or may include an access point in a non-3GPP (non-3GPP) network. For ease of description, the RAN node is used for representation below.

The RAN node in embodiments of this application may also be sometimes referred to as an access network device, a network device, a RAN entity, an access node, or the like.

In a possible scenario, the RAN node may be a base station (base station), an evolved base station (evolved NodeB, eNodeB), an access point (access point, AP), a transmission reception point (transmission reception point, TRP), a next-generation base station (next-generation NodeB, gNB), a base station in a future mobile communication system, an access node in a Wi-Fi system, or the like. The RAN node may be a macro base station (for example, 110a in FIG. 1), a micro base station or an indoor station (for example, 110b in FIG. 1), a relay node or a donor node, or a radio controller in a CRAN scenario. Optionally, the RAN node may alternatively be a server, a wearable device, a vehicle, an in-vehicle device, or the like. For example, an access network device in a V2X technology may be a road side unit (road side unit, RSU). All or some functions of the RAN node in this application may alternatively be implemented by using a software function running on hardware, or may be implemented by using a virtualization function instantiated on a platform (for example, a cloud platform). The RAN node in this application may alternatively be a logical node, a logical module, or software that can implement all or some functions of the RAN node.

In another possible scenario, a plurality of RAN nodes collaborate to assist a terminal in implementing wireless access, and different RAN nodes separately implement a part of functions of a base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, in an open-radio access network (open-radio access network, O-RAN) system, the CU may also be referred to as an open-central unit (open-central unit, O-CU) (open CU), the DU may also be referred to as an open-distributed unit (open-distributed unit, O-DU) (open DU), the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

3. An AMF is mainly used for functions such as access control, mobility management, and attachment and detachment.

4. An SMF is mainly used for user plane network element selection, user plane network element redirection, internet protocol (internet protocol, IP) address assignment for a terminal device, session establishment, modification, and release, and QoS control.

5. A UPF is mainly used for receiving and forwarding user plane data. For example, the UPF may receive user plane data from a DN, and send the user plane data to a terminal device via an AN device. The UPF may alternatively receive user plane data from a terminal device via an AN device, and forward the user plane data to a DN.

6. An NEF is mainly used for securely exposing, to the outside, a service, a capability, and the like that are provided by a 3GPP network function.

7. A PCF is mainly used for guiding a unified policy framework for network behaviors, and providing policy rule information and the like for a control plane network element (for example, an AMF or an SMF).

8. An AF is mainly used for providing a service for a 3GPP network, for example, interacting with a PCF to perform policy control, and the like.

9. A network slice selection function (network slice selection function, NSSF) is mainly used for network slice selection.

10. A UDM is mainly used for subscription data management of UE, including storage and management of a UE identifier, access authorization of the UE, and the like.

11. A DN is an operator network mainly used for providing a data service for UE, for example, the internet (Internet), a third-party service network, or an IP multi-media service (IP multi-media service, IMS) network.

12. An AUSF is mainly used for user authentication and the like.

13. An NRF is mainly used for storing a network functional entity, description information of a service provided by the network functional entity, and the like.

In the network architecture shown in FIG. 1, the network elements may communicate with each other through interfaces. For example, the terminal is connected to the AMF through an N1 interface, the RAN is connected to the AMF through an N2 interface, the RAN is connected to the UPF through an N3 interface, the UPF is connected to the SMF through an N4 interface, and the AMF is connected to the SMF through an N11 interface.

It should be noted that, names of the network elements and the communication interfaces between the network elements in FIG. 1 are briefly described by using an example specified in a current protocol. However, this does not limit embodiments of this application to only being applied to a currently known communication system. Therefore, a standard name that appears when a current protocol is used as an example for description is a functional description. A specific name of a network element, an interface, signaling, or the like is not limited in this application, and only indicates a function of the network element, the interface, or the signaling, and may be correspondingly extended to another system, for example, a 2G, 3G, 4G, or future communication system.

It should be understood that, the network architecture shown in FIG. 1 is merely an example for description, and a network architecture applicable to embodiments of this application is not limited thereto. Any network architecture that can implement functions of the foregoing network elements is applicable to embodiments of this application.

It should be further understood that, the AMF, the SMF, the UPF, the PCF, the NSSF, the AUSF, the UDM, and the like shown in FIG. 1 may be understood as network elements configured to implement different functions in a core network, for example, may be combined as required to form a network slice. The core network elements may be independent devices, or may be integrated into a same device to implement different functions. Specific forms of the foregoing network elements are not limited in this application.

For ease of understanding of embodiments of this application, basic concepts in this application are briefly described.

### 1. NTN system

The NTN system is generally a communication network in which an airborne platform or a spaceborne platform is used to embark a transmission equipment relay node or a base station. The airborne platform or the spaceborne platform includes but is not limited to an uncrewed aerial vehicle, a hot air balloon, an airplane, a satellite, and the like.

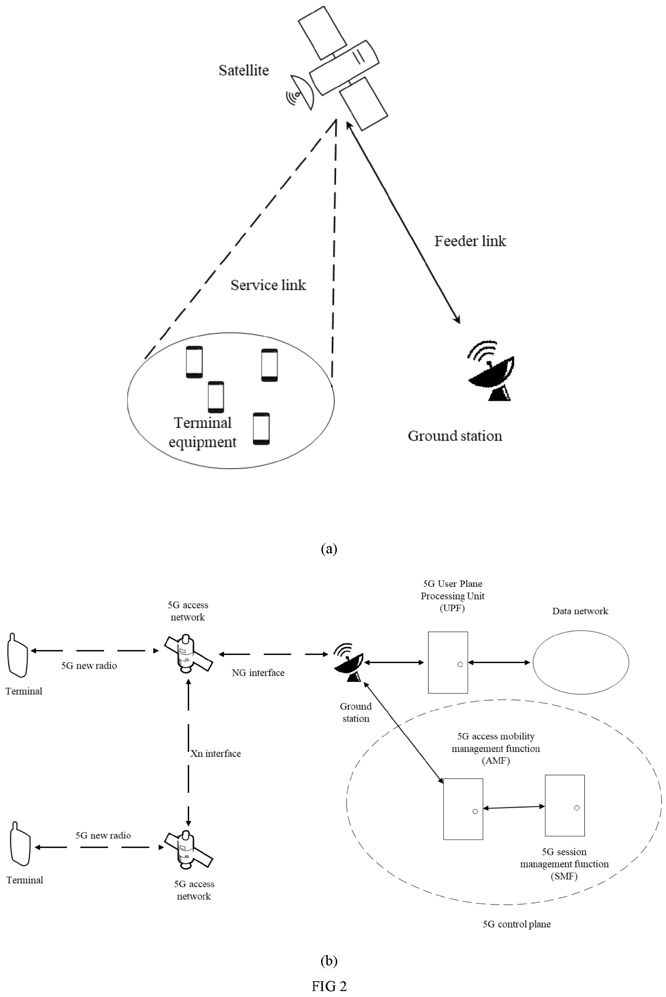

FIG. 2(a) is a schematic architectural diagram of an NTN system. For example, the high-altitude platform is a satellite. The architecture may include a ground station (gateway, GW), a satellite, user equipment (user equipment, UE), and the like. The ground station in the NTN system can provide a function similar to that of a gateway in a terrestrial communication system, for example, establishing a connection to the UE and communicating with a server. For distinction from the terrestrial communication system, the gateway is referred to as the ground station herein. The ground station further has functions such as monitoring and fault query for a satellite, and packet switching for communication data, interface protocol conversion, and the like. The ground station is connected to a core network. A link between the ground station and the satellite is referred to as a feeder link (feeder link). A link between the satellite and the user equipment is referred to as a service link (service link).

Generally, the satellite may have two operating modes: a transparent (transparent) mode and a regenerative mode. In the transparent mode, data of a terminal device generally reaches the ground station via the satellite, and then reaches a destination via the ground station. Generally, because a distance between the satellite and the terminal device on the ground is long, for example, more than 1,000 kilometers, a transmission latency is large when the satellite transmits data in the operating mode. In the regenerative mode, the satellite may perform filtering, frequency amplification, and signal amplification on a wireless signal, and may also involve signal demodulation, decoding, packet switching or routing, and encoding and modulation. Therefore, the satellite operating in the regenerative mode basically has all or some functions of a base station in a cellular network.

It should be understood that, an example of the NTN communication scenario is described in FIG. 2(a). In embodiments of this application, for example, a communication apparatus is a satellite. However, the communication apparatus in embodiments of this application is not limited thereto. The communication apparatus in this application may alternatively be a ground station, a high altitude platform, an uncrewed aerial vehicle in NTN communication, a terminal device that undertakes a base station function in device-to-device (Device-to-Device, D2D) communication, or the like.

FIG. 2(b) shows a network architecture that integrates satellite communication and 5G technologies. Ground UE accesses a network through 5G new radio. A 5G access network device is deployed on a satellite, and is connected to a core network on the ground through a radio link. In addition, there is a radio link between satellites, to implement signaling exchange and user data transmission between access network devices. Network elements and interfaces of the network elements in FIG. 2(b) are described as follows.

A terminal device is a mobile device that supports 5G new radio, for example, typically a mobile phone, or a pad. The terminal device may access a satellite network through an air interface and initiate a service, for example, a call or network access.

A 5G access network device mainly provides a radio access service, schedules a radio resource for an access terminal, provides a reliable wireless transmission protocol, a reliable data encryption protocol, and the like, and is, for example, a base station.

A 5G core network provides services such as user access control, mobility management, session management, user security authentication, and charging. The 5G core network includes a plurality of functional units, and may be divided into a control plane functional entity and a data plane functional entity. An access and mobility management function (access and mobility management function, AMF) is responsible for user access management, security authentication, and mobility management. A user plane function (user plane function, UPF) is responsible for managing functions such as user plane data transmission, traffic statistics, and the like.

A ground station is responsible for forwarding signaling and service data between a satellite access network device and a 5G core network.

5G new radio is a radio link between a terminal and an access network device.

An Xn interface is an interface between a 5G access network device and an access network device, and is mainly for signaling exchange such as handover.

An NG interface is an interface between a 5G access network device and a 5G core network, and is mainly for exchanging signaling such as an NAS of a core network, and service data of users.

The foregoing network architecture in which the satellite communication and the 5G technologies are integrated is merely an example. The satellite communication may be further integrated with a 4G communication system architecture or a future communication system architecture.

### 2. Ephemeris information

The ephemeris information in this application includes but is not limited to conventional ephemeris information, satellite map information, and deployment information of a gateway. The conventional ephemeris information includes, but is not limited to, an orbit parameter, a parameter like an orientation of the satellite obtained through calculation based on the orbit parameter, or the like. It may be understood that, the conventional ephemeris information may be used for calculating, predicting, describing, or tracking a flight status of the satellite, for example, time, a location, or a speed. For example, the conventional ephemeris information may be 17-byte (bytes) information, indicating the location (78 bits) and the speed (54 bits), or the conventional ephemeris information may be 18-byte information, indicating the orbit parameter (for example, a parameter like a semi-major axis, a range (range), an eccentricity, or a perigee angle). The satellite map information may be a coverage area of a satellite on a map at each moment.

A specific form, content, and name of the ephemeris information is not limited in this application. For details, refer to a definition of the ephemeris information in an existing protocol. For example, the ephemeris information in this application may also be referred to as satellite coverage information (satellite coverage availability information).

### 3. Inter-satellite link

Non-geostationary satellites move relative to the ground. A plurality of satellites are often needed to form a constellation to provide continuous coverage for a fixed area on the ground, on the sea, or the like. In addition, the inter-satellite link is used for implementing on-satellite forwarding. Therefore, ground base stations do not need to be deployed around the world, and a coverage capability is enhanced.

Inter-satellite links are classified into two types. One type is a link between satellites in a same orbit, referred to as an intra-orbit inter-satellite link, and the other type is a link between orbits, referred to as an inter-orbit inter-satellite link. The inter-orbit inter-satellite link may include a codirectional-orbit inter-satellite link and a cross seam link. The codirectional-orbit inter-satellite link is a link between two adjacent orbit satellites running in a same direction. The codirectional inter-satellite link may be disconnected due to a change in a relative location relationship between the satellites when the satellites approach above a polar area. The cross seam link is a link between two satellites running in opposite directions. Because the two satellites run in opposite directions, the cross seam link is difficult to be established or can be established only for a short period of time.

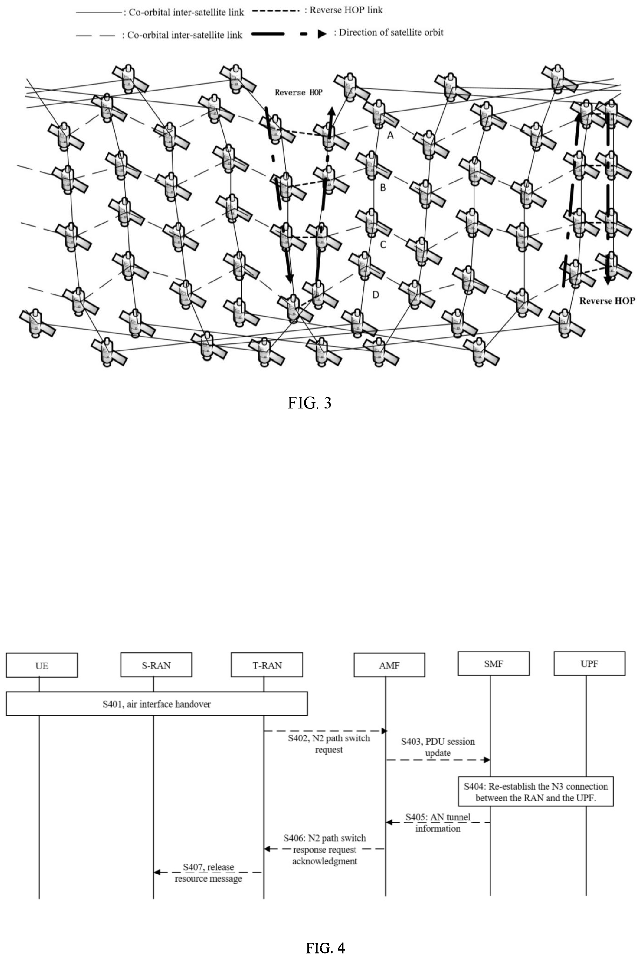

For ease of understanding, the inter-satellite link is described with reference to FIG. 3. FIG. 3 is a diagram of two-dimensional expansion of a polar orbit constellation. An inclination angle of each orbit is fixed 90 degrees (where a satellite orbit passes over the polar area).

### 4. Satellite constellation

The satellite constellation is a set of satellites that are launched into an orbit and can normally work. Usually, the satellite constellation is a satellite network including some satellites configured in a specific manner. A main satellite constellation includes a global positioning system (global positioning system, GPS) satellite constellation, a GLONASS (GLONASS) satellite constellation, a Galileo (Galileo) satellite constellation, a BeiDou satellite constellation, and the like.

Main constellation types in this application include:
a low earth orbit (low earth orbit, LEO) satellite polar orbit constellation, a medium earth orbit (mid earth orbit, MEO) satellite polar orbit constellation, an inclined LEO orbit constellation, an inclined MEO orbit constellation, and the like.

In a network architecture shown in FIG. 3, UE may need to be handed over from a source RAN (source RAN, S-RAN) to a target RAN (target RAN, T-RAN) due to reasons such as signal strength, load balancing, and a UE location change. Based on different interfaces for transmitting signaling or data between satellites, the UE may be handed over in two manners. The two manners are respectively a handover manner based on an Xn interface (denoted as Xn-based handover) and a handover manner based on an N2 interface (denoted as N2-based handover).

The Xn-based handover means that there is an interface (the interface is referred to as the Xn interface) between the S-RAN and the T-RAN, and the S-RAN may directly send a context of the UE to the T-RAN through the Xn interface.

FIG. 4 is a schematic flowchart of Xn-based handover. The Xn-based handover may include the following several steps.

S401: Air interface handover procedure.

The step may be performed by UE, an S-RAN, and a T-RAN through interaction. Air interface handover may be performed in a handover preparation and execution phase. For details, refer to 3GPP TS 38.300.

S402: The T-RAN sends an N2 path switch (N2 path switch) request message to an AMF. Correspondingly, the AMF receives the N2 path switch request message from the T-RAN.

For example, after the air interface handover is completed, the T-RAN sends the N2 path switch request message to the AMF, to notify a core network to switch an N3 path to the T-RAN. The message may include a successfully switched PDU session and N2 information (for example, a QoS flow) of the PDU session, a PDU session that fails to be switched and N2 information of the PDU session, UE location information, and the like.

S403: The AMF initiates a PDU session update to an SMF.

For example, the AMF sends an update context request (Nsmf_PDUSession_UpdateSMContext Request) message to the SMF, to initiate the PDU session update.

The update context request message may include the following information: AN tunnel information (AN tunnel info) allocated by the T-RAN to the PDU session, and a RAN UE NGAP ID allocated by the T-RAN to the UE (where the NGAP is an NG application protocol (NG application protocol)). It should be noted that, the AN tunnel information is at a PDU session granularity, and may be understood as an address of a RAN when a UPF transmits a downlink packet by using a session.

S404: The SMF re-establishes an N3 connection between the RAN and a UPF.

S405: The SMF sends the AN tunnel information to the AMF. Correspondingly, the AMF receives the AN tunnel information from the SMF.

For example, the AN tunnel information may be carried in an update context response (Nsmf_PDUSession_UpdateSMContext Response) message.

S406: The AMF sends an N2 path switch response request acknowledgment (N2 path switch request Ack) message to the T-RAN.

S407: The T-RAN sends a resource release (release resource) message to the S-RAN, to release a resource on the S-RAN side. Correspondingly, the S-RAN receives the resource release message from the T-RAN.

When there is no interface between the S-RAN and the T-RAN, the S-RAN hands over the UE to the T-RAN based on the N2 interface, where the handover manner is the N2-based handover. In the N2-based handover, the S-RAN may send a context of the UE to the T-RAN by using a core network. For example, the S-RAN sends the context of the UE to the AMF through an N2 interface between the RAN and the AMF. Then, the AMF sends the context of the UE to the T-RAN by using an N2 interface between the AMF and the T-RAN.

The N2-based handover may include N2-based handover preparation and N2-based handover. After the S-RAN node initiates a handover procedure, an N2-based handover preparation phase may include allocating resources to a target side core network and a wireless network. For example, the handover preparation phase may mainly include: The SMF selects a new T-UPF as an intermediate UPF. An N9 interface tunnel is established between the T-UPF and a PSA UPF. The T-RAN allocates wireless resources, an N3 interface tunnel is established between the T-RAN and the T-UPF, and a context of the UE is set up on a T-AMF. For example, the S-RAN sends a handover required (Handover Required) message to the T-AMF through the N2 interface. The message includes a list of PDU sessions to be handed over and a source-to-target transparent container (source to Target transparent container), where the container includes the context of the UE sent by the S-RAN to the T-RAN.

In the N2-based handover phase, the AMF sends a handover command (handover command) to the S-RAN, including a target to source transparent container, a list of PDU sessions that can be handed over to the T-RAN, and a list of PDU sessions that fail to be handed over. After receiving the handover command, the S-RAN sends the handover command to the UE, including a UE container (UE container). After the UE is synchronized with a target cell, the UE sends a handover confirm (handover confirm) message to the T-RAN. After receiving the handover confirm message, the T-RAN sends handover notify (handover notify) to the AMF, indicating that the UE is successfully handed over. The AMF sends N2 SM information to the SMF. The information may include tunnel information allocated by the T-RAN to the PDU session. The SMF may configure the UPF based on the tunnel information of the T-RAN. For a specific procedure of the N2-based handover procedure, refer to descriptions in an existing protocol. Details are not described again.

In a regenerative satellite scenario, it is generally considered that there is an inter-satellite link (inter-satellite link, ISL) between two satellites. In other words, there is an Xn interface. When there is the Xn interface, the satellite performs UE handover based on the Xn interface. However, due to continuous movement of the satellites, a path of the inter-satellite link is not fixed, and a handover manner based on the Xn interface may cause a large handover latency.

That is, in the NTN, the satellite node may perform a mobility management procedure of the UE within coverage of the satellite node in a plurality of handover manners. How to select a proper handover manner becomes an urgent problem to be resolved.

For ease of understanding of embodiments of this application, the following several points are described.

First, in embodiments of this application, unless otherwise stated or there is a logic conflict, terms and/or descriptions in different embodiments are consistent and may be referenced by each other, and technical features in different embodiments may be combined to form a new embodiment based on an internal logical relationship.

Second, "at least one" shown in this application means one or more, and "a plurality of" means two or more. In addition, in embodiments of this application, "first", "second", and various numeric numbers (for example, "#1" and "#2") are merely used for distinguishing for ease of description, and are not used to limit the scope of embodiments of this application. Sequence numbers in the following processes do not mean an execution sequence. The execution sequence of the processes should be determined based on functions and internal logic of the processes, and should not constitute any limitation on implementation processes of embodiments of this application. It should be understood that objects described in this way may be interchangeable in proper cases, so that solutions other than embodiments of this application can be described. In addition, in embodiments of this application, words such as "S510" are merely identifiers for ease of description, and do not limit a sequence of performing steps.

Third, in embodiments of this application, a term like "example", "for example", or the like is used for representing giving an example, an illustration, or a description. Any embodiment or design scheme described as an "example" or "for example" in this application should not be explained as being more preferred or having more advantages than another embodiment or design scheme. Exactly, use of the term "example", "for example", or the like is intended to present a related concept in a specific manner.

Fourth, in embodiments of this application, "of (of)", "corresponding (corresponding, relevant)", "corresponding (corresponding)", and "associate (associate)" may sometimes be used interchangeably. It should be noted that meanings expressed by the terms are consistent when differences are not emphasized.

Fifth, in embodiments of this application, "in a case of", "when", and "if" may be used interchangeably sometimes. It should be noted that meanings expressed by the terms are consistent when differences are not emphasized.

Sixth, the term "and/or" in this specification describes merely an association relationship between associated objects, and indicates that three relationships may exist. For example, A and/or B may indicate the following three cases: Only A exists, both A and B exist, and only B exists. In addition, the character "/" in this specification generally indicates an "or" relationship between the associated objects.

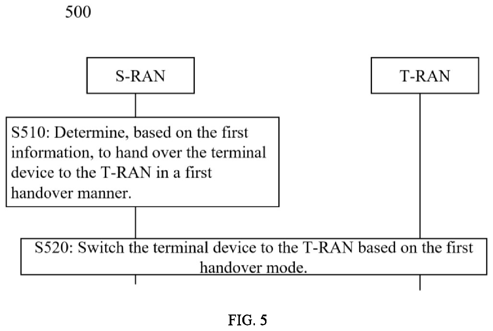

FIG. 5 is a schematic flowchart of a communication method 500. The method may include the following steps.

S510: A source access network device (S-RAN) determines, based on first information, to hand over a terminal device to a target access network device (T-RAN) in a first handover manner.

The first handover manner is a handover manner based on an interface between access network devices, or the first handover manner is a handover manner based on an interface between an access network device and a core network device.

That the S-RAN determines, based on the first information, to hand over the terminal device to the T-RAN in the first handover manner may be understood as follows: The S-RAN determines, based on the first information, to hand over the terminal device to the T-RAN in the handover manner based on the interface between the access network devices or in the handover manner based on the interface between the access network device and the core network device, or the S-RAN determines, based on the first information, whether to hand over the terminal device to the T-RAN in the handover manner based on the interface between the access network devices or in the handover manner based on the interface between the access network device and the core network device.

In other words, the S-RAN determines, based on the first information, the handover manner of handing over the terminal device to the T-RAN. The handover manner may be one of the handover manner based on the interface between the access network devices and the handover manner based on the interface between the access network device and the core network device.

The interface between the access network devices is an Xn interface, and the interface between the access network device and the core network device is an N2 interface. The handover manner based on the interface between the access network devices may be Xn-based handover; or the handover manner based on the interface between the access network device and the core network device may be N2-based handover. Alternatively, the handover manner based on the interface between the access network devices may be Xn interface-based handover, or the handover manner based on the interface between the access network device and the core network device may be N2 interface-based handover.

The first information may include at least one of the following information: information of a transmission path between the S-RAN and the T-RAN, time information, or location information of the S-RAN.

The information of the transmission path between the S-RAN and the T-RAN may be at least one of a hop count of the transmission path, a latency of the transmission path, and a distance of the transmission path.

Specifically, the S-RAN and the T-RAN may be different satellites, or may be access network devices deployed on different satellites. The S-RAN may communicate with the T-RAN by using an inter-satellite link or a satellite-to-ground link. In other words, the transmission path between the S-RAN and the T-RAN may be an inter-satellite link or a satellite-to-ground link.

If the S-RAN and the T-RAN directly communicate with each other through the Xn interface, the transmission path between the S-RAN and the T-RAN is an inter-satellite link between the S-RAN and the T-RAN. If the S-RAN and the T-RAN communicate with each other through another satellite, the transmission path between the S-RAN and the T-RAN includes an inter-satellite link between the S-RAN and another satellite, and an inter-satellite link between the another satellite and the T-RAN. Further, when there are two or more other satellites, the inter-satellite link also includes an inter-satellite link between the other satellites. For example, if the S-RAN is connected to the T-RAN by using a RAN 1 and a RAN 2, the transmission path includes an inter-satellite link between the S-RAN and the RAN 1, an inter-satellite link between the RAN 1 and the RAN 2, and an inter-satellite link between the RAN 2 and the T-RAN. If the S-RAN and the T-RAN communicate with each other by using a core network device, the transmission path between the S-RAN and the T-RAN may include a satellite-to-ground link. The satellite-to-ground link includes a satellite-to-ground link between the S-RAN and a core network device (for example, an access management network element or a user plane network element), and a satellite-to-ground link between the core network device and the T-RAN.

The "satellite-to-ground link" may be replaced with a "feeder link", a "ground link", a "feeder connection", or a "ground connection". This is not limited.

The following describes in detail information of the transmission path between the S-RAN and the T-RAN.

The hop count of the transmission path may be represented by a quantity of satellites through which information or data passes when the S-RAN sends the information or data to the T-RAN. The satellite through which the information or data passes may include the T-RAN.

The "hop count of the transmission path" may be replaced with "hop count included in the transmission path", "hop count passed through by the transmission path", "a quantity of satellites included in the transmission path", "hop count of an inter-satellite link", or the like. This is not limited.

For example, as shown in FIG. 3, it is assumed that the S-RAN is a satellite A, and the T-RAN is a satellite D. If the S-RAN sends the information or data to the T-RAN by using a transmission path "satellite A→satellite B→satellite C→satellite D", the satellites through which the information or data passes include the satellite B, the satellite C, and the satellite D. In other words, there are three satellites through which the information or data passes. In other words, there are three hops of the transmission path between the S-RAN and the T-RAN.

The latency of the transmission path may be a latency of sending information or data by the S-RAN and the T-RAN by using the transmission path between the S-RAN and the T-RAN, or the latency of the transmission path is duration required for sending information or data from the S-RAN to the T-RAN by using the transmission path.

Specifically, the transmission path may be an inter-satellite link that directly connects the S-RAN and the T-RAN, or may be a transmission path that connects the S-RAN and the T-RAN by using one or more other satellites and an inter-satellite link. The latency of the transmission path may be a latency for the S-RAN to transmit information or data to the T-RAN by using the inter-satellite link, or the latency of the transmission path is a latency for the S-RAN to transmit information or data to the T-RAN through the Xn interface. In this case, the "latency of the transmission path" may be replaced with the "Xn-based handover latency" or the "Xn interface-based handover latency".

For example, in FIG. 3, the satellite A is the S-RAN, and the satellite D is the T-RAN. The latency of the transmission path may be a latency for the satellite A to send information or data to the satellite D through the satellite B and the satellite C. Alternatively, the latency of the transmission path may be a latency for the satellite A to send information or data to the satellite D directly by using an inter-satellite link.

If the transmission path includes a satellite-to-ground link, the latency of the transmission path may be a latency for the S-RAN to send information or data to the T-RAN by using a satellite-to-ground link between the S-RAN and a core network device and a satellite-to-ground link between the core network device and the T-TAN. Alternatively, the latency of the transmission path includes a latency for the S-RAN to send information or data to a core network device by using an N2 interface between the S-RAN and the core network device, and a latency for the core network device to send information or data to the T-RAN through an N2 interface between the core network device and the T-RAN. In this case, the "latency of the transmission path" may be replaced with the "N2-based handover latency" or the "N2 interface-based handover latency".

The distance of the transmission path may refer to a length of an inter-satellite link or a satellite-to-ground link included between the S-RAN and the T-RAN.

Optionally, the method further includes: The S-RAN determines the information of the transmission path. That is, the S-RAN determines at least one of the hop count of the transmission path, the latency of the transmission path, and the distance of the transmission path. The following separately describes specific manners of determining, by the S-RAN, the hop count of the transmission path, the latency of the transmission path, and the distance of the transmission path.

Specifically, that the S-RAN determines the hop count of the transmission path may include: The S-RAN determines the hop count of the transmission path based on ephemeris information and time information. The time information may be a current moment, or in other words, the time information includes a moment at which the S-RAN determines the hop count of the transmission path.

That the S-RAN determines the hop count of the transmission path may further include: The S-RAN determines the hop count of the transmission path based on a topology structure of the transmission path. The topology structure of the transmission path may refer to a layout of access network devices included on the transmission path, or the topology structure of the transmission path may refer to a connection relationship between access network devices included on the transmission path. The topology structure of the transmission path may be added to the access network devices that are connected to each other by configuration.

For example, the topology structure of the transmission path is a connection relationship from the satellite A to the satellite D shown in FIG. 3, and a configuration of the topology structure of the transmission path may be shown in Table 1. It is assumed that the S-RAN is the satellite A. If the T-RAN is the satellite C, there are two hops of the transmission path, and the access network device that the transmission path passes through includes the satellite B. If the T-RAN is the satellite D, there are three hops of the transmission path, and the access network devices that the transmission path passes through include the satellite B and the satellite C.

Optionally, the topology structure of the transmission path includes a distance between the S-RAN and the T-RAN. In other words, the S-RAN may further determine the distance of the transmission path based on the topology structure of the transmission path. As shown in Table 1, when the S-RAN is the satellite A and the T-RAN is the satellite C, the distance of the transmission path is 50 km (Km); or when the S-RAN is the satellite A and the T-RAN is the satellite C, the distance of the transmission path is 100 km.

**Table 1**

| | T-RAN ID | | Hops/Distance | Access network devices that a transmission path passes through | |
|---|---|---|---|---|---|
| | Satellite C | | 2 hops/50 km | | Satellite B |
| | Satellite D | | 3 hops/100 km | | Satellite B and satellite C |

The S-RAN may determine the latency of the transmission path in Manner 1 and/or Manner 2.

Manner 1: The S-RAN obtains an Xn-based handover latency and/or an N2-based handover latency from the S-RAN to the T-RAN through measurement.

For example, the S-RAN measures the Xn-based handover latency from the S-RAN to the T-RAN by measuring a transmission latency of a signal sent by the S-RAN to the T-RAN.

For example, the S-RAN sends a measurement signal to the T-RAN. For example, the S-RAN sends the measurement signal to the T-RAN through an Xn interface. Correspondingly, the T-RAN receives the measurement signal from the S-RAN, and sends a response signal to the S-RAN in response to the measurement signal. The S-RAN determines the Xn-based handover latency based on a moment at which the measurement signal is sent and a moment at which the response signal is received. In other words, the S-RAN determines the Xn-based latency based on a round-trip transmission latency of measurement signal. Alternatively, when the response signal carries a timestamp added by the T-RAN, the S-RAN may determine the Xn-based handover latency based on the moment at which the measurement signal is sent and the timestamp.

The S-RAN may measure the N2-based handover latency from the S-RAN to the T-RAN by measuring a transmission latency of control plane signaling between the T-RAN and a core network device (for example, an access management network element), or by measuring a transmission latency of user plane signaling between the S-RAN and a core network device (for example, a user plane function network element). Alternatively, the N2-based handover latency from the S-RAN to the T-RAN may be equivalent to the transmission latency of the control plane signaling between the T-RAN and the core network device, or the transmission latency of the user plane signaling between the S-RAN and the core network device.

For example, the S-RAN sends indication information to the T-RAN, where the indication information indicates to measure an information transmission latency between the T-RAN and the core network device. The T-RAN sends a measurement signal to the core network device based on the indication information; and in response to the measurement signal, the core network device sends a response signal to the T-RAN. The T-RAN determines the N2-based handover latency based on a moment at which the measurement signal is sent and a moment at which the response signal is received, and feeds back, to the S-RAN, the N2-based handover latency from the S-RAN to the T-RAN obtained through measurement.

For another example, the S-RAN sends a measurement signal to the core network device, where the measurement signal includes an identifier of the T-RAN and a first timestamp. The core network device sends, to the T-RAN based on the measurement signal, a response signal that carries a second timestamp; and the T-RAN sends the response signal to the S-RAN, so that the S-RAN measures the N2-based handover latency from the S-RAN to the T-RAN based on the second timestamp and the first timestamp.

Manner 2: The S-RAN determines an Xn-based handover latency and/or an N2-based handover latency between the S-RAN and the T-RAN based on historical latency information.

The historical latency information may include one or more Xn-based handover latencies and/or N2-based handover latencies between the S-RAN and the T-RAN stored by the S-RAN. For example, the Xn-based handover latency and/or the N2-based handover latency are/is an Xn-based handover latency and/or an N2-based handover latency between the S-RAN and the T-RAN that are/is obtained through a latest measurement. The plurality of Xn-based handover latencies and/or N2-based handover latencies are Xn-based handover latencies and/or N2-based handover latencies between the S-RAN and the T-RAN that are obtained through latest several measurements.

In other words, the S-RAN may determine a stored Xn-based handover latency and/or N2-based handover latency between the S-RAN and the T-RAN as the latency of the transmission path. Alternatively, the S-RAN determines the latency of the transmission path based on a plurality of stored Xn-based handover latencies and/or N2-based handover latencies between the S-RAN and the T-RAN. A specific manner of determining the latency of the transmission path based on the stored plurality of Xn-based handover latencies and/or N2-based handover latencies is not limited in this application. For example, the S-RAN may obtain the latency of the transmission path based on model prediction and the stored plurality of Xn-based handover latencies and/or N2-based handover latencies between the S-RAN and the T-RAN. For another example, the S-RAN may determine the latency of the transmission path by determining an average value of the plurality of stored Xn-based handover latencies and/or N2-based handover latencies between the S-RAN and the T-RAN.

The historical latency information may further include an Xn-based handover latency and/or an N2-based handover latency between the S-RAN and the T-RAN at a same location of the S-RAN when a handover is performed. In this case, the S-RAN may determine, based on the ephemeris information, that a current location is the same as a location of the S-RAN when the historical latency information is stored when a handover is performed. The historical latency information may further include an Xn-based handover latency and/or an N2-based handover latency between the S-RAN and the T-RAN at a moment when a handover is performed before one or more cycles. In this case, the S-RAN may determine, based on the ephemeris information, that a time interval between the current moment and a moment at which a handover from the S-RAN to the T-RAN is performed when the historical latency information is stored is an integer multiple of a cycle in which the S-RAN covers a place.

Optionally, the S-RAN determines the latency of the transmission path based on Manner 1 and Manner 2. For example, when the S-RAN obtains the Xn-based handover latency and/or the N2-based handover latency from the S-RAN to the T-RAN through measurement, the S-RAN may determine the latency of the transmission path based on the one or more Xn-based handover latencies and/or N2-based handover latencies between the S-RAN and the T-RAN stored by the S-RAN.

The following describes a specific manner in which the S-RAN determines, based on the first information, to hand over the terminal device to the T-RAN in the first handover manner.

When the first information includes the information of the transmission path, and the information of the transmission path includes the hop count of the transmission path, the S-RAN may determine, based on the hop count of the transmission path and a threshold (denoted as a threshold #1) corresponding to the hop count of the transmission path, to hand over the terminal device to the T-RAN in the first handover manner.

For example, if the hop count of the transmission path is greater than the threshold #1, the S-RAN determines to hand over the terminal device to the T-RAN through N2-based handover, or the S-RAN determines that the first handover manner is an N2-interface-based handover manner. If the hop count of the transmission path is less than the threshold #1, the S-RAN determines to hand over the terminal device to the T-RAN through Xn-based handover, or the S-RAN determines that the first handover manner is an Xn interface-based handover manner.

It should be understood that a case in which the hop count of the transmission path is equal to the threshold #1 is not limited in this application. For example, when the hop count of the transmission path is equal to the threshold #1, the S-RAN may hand over the terminal device to the T-RAN in the N2-based handover manner; or when the hop count of the transmission path is equal to the threshold #1, the S-RAN may hand over the terminal device to the T-RAN in the Xn-based handover manner.

It may be understood that when the hop count of the transmission path is greater than the threshold #1, a latency for the S-RAN to hand over the terminal device to the T-RAN through N2-based handover may be less than a latency for the S-RAN to hand over the terminal device to the T-RAN through Xn-based handover. When the hop count of the transmission path is less than the threshold #1, a latency for the S-RAN to hand over the terminal device to the T-RAN through Xn-based handover may be less than a latency for the S-RAN to hand over to the T-RAN through N2-based handover.

The threshold #1 may be obtained through measurement, or may be determined based on a configuration. A manner of determining the threshold #1 is not limited in this application. The S-RAN may obtain the threshold #1 based on a local configuration or a service level agreement (service level agreement, SLA) configuration; or the S-RAN obtains the threshold #1 from a core network device (for example, an AMF or an SMF); or the threshold #1 may be an agreed value, for example, agreed in a protocol.

When the information of the transmission path includes the distance of the transmission path, the S-RAN may determine, based on the distance of the transmission path and a threshold (denoted as a threshold #2) corresponding to the distance of the transmission path, to hand over the terminal device to the T-RAN in the first handover manner.

For example, if the distance of the transmission path is greater than the threshold #2, the S-RAN determines to hand over the terminal device to the T-RAN through N2-based handover, or in other words, the S-RAN determines that the first handover manner is an N2 interface-based handover manner. If the distance of the transmission path is less than the threshold #2, the S-RAN determines to hand over the terminal device to the T-RAN through Xn-based handover, or in other words, the S-RAN determines that the first handover manner is an Xn interface-based handover manner.

Similarly, a case in which the distance of the transmission path is equal to the threshold #2 is not limited in this application.

For a manner in which the S-RAN obtains the threshold #2, refer to a manner in which the threshold #1 is obtained.

When the information of the transmission path includes the latency of the transmission path, the S-RAN may determine, based on the latency of the transmission path and a threshold (denoted as a threshold #3) corresponding to the latency of the transmission path, to hand over the terminal device to the T-RAN. The latency of the transmission path may be an Xn-based handover latency or an N2-based handover latency.

For example, when the latency of the transmission path is the Xn-based handover latency, if the Xn-based handover latency is greater than the threshold #3, the S-RAN determines to hand over the terminal device to the T-RAN through N2-based handover, or in other words, the S-RAN determines that the first handover manner is an N2 interface-based handover manner. If the Xn-based handover latency is less than the threshold #3, the S-RAN determines to hand over the terminal device to the T-RAN through Xn-based handover, or in other words, the S-RAN determines that the first handover manner is an Xn interface-based handover manner.

When the latency of the transmission path is the N2-based handover latency, if the N2-based handover latency is less than the threshold #3, the S-RAN determines to hand over the terminal device to the T-RAN through N2-based handover, or in other words, the S-RAN determines that the first handover manner is an N2 interface-based handover manner. If the N2-based handover latency is greater than the threshold #3, the S-RAN determines to hand over the terminal device to the T-RAN through N2-based handover, or in other words, the S-RAN determines that the first handover manner is an N2 interface-based handover manner.

Similarly, a case in which the latency of the transmission path is equal to the threshold #3 is not limited in this application.

For a manner in which the S-RAN obtains the threshold #3, refer to a manner in which the threshold #1 is obtained. In addition, when the latency of the transmission path is the Xn-based handover latency or the N2-based handover latency, values of the threshold #3 may be different.

Optionally, when the transmission path latency includes the X-based handover latency and the N2-based handover latency, the S-RAN may further determine, based on a value relationship between the Xn-based handover latency and the N2-based handover latency, a handover manner of handing over the terminal device to the T-RAN.

Specifically, the S-RAN hands over the terminal device to the T-RAN in a handover manner with a shorter latency. That is, if the Xn-based handover latency is less than the N2-based handover latency, the S-RAN determines to hand over the terminal device to the T-RAN in the Xn-based handover manner; or if the N2-based handover latency is less than the Xn-based handover latency, the S-RAN hands over the terminal device to the T-RAN in the N2-based handover manner.

Similarly, a case in which the Xn-based handover latency is equal to the N2-based handover latency is not limited in this application.

When the first information includes the time information and/or the location information, the S-RAN determines, based on the time information and/or the location information and a first correspondence, the handover manner of handing over the terminal device to the T-RAN.

The time information may be a current moment, or in other words, a moment at which the S-RAN determines the handover manner. The location information may be information of a current location of the S-RAN, for example, longitude and latitude coordinates of the current location of the S-RAN, XYZ coordinates of Cartesian or earth-centered earth-fixed (earth-centered earth-fixed, ECEF) coordinates, or other information or data that can represent a location. This is not limited.

The first correspondence includes a correspondence between time information and/or location information and a handover manner. The time information may indicate a time range, and the location information may indicate a range of information or data representing the location.

For example, the first correspondence may be shown in Table 2. When the time range is 9:00 to 10:00, and/or the location information is a latitudes x1-x2 and a longitude y1-y2, the handover manner is Xn-based handover. When the time range is 10:00 to 10:05, and/or the location information is a latitude x3-x4, and a longitude y3-y4, the handover manner is N2-based handover.

With reference to Table 2, an example in which the S-RAN determines, based on the time information and/or the location information and the first correspondence, the handover manner of handing over the terminal device to the T-RAN is as follows: If the S-RAN determines that a current moment is 9:30, the S-RAN determines, based on the first correspondence, to hand over the terminal device to the T-RAN through Xn-based handover. Alternatively, if the S-RAN determines that a current location is a latitude x0 and a longitude y0, where x0∈[x1,x2], and y0∈[y1,y2], the S-RAN determines, based on the first correspondence, to hand over the terminal device to the T-RAN through N2-based handover.

**Table 2**

| | Time/Location information | | Handover manner |
|---|---|---|---|
| 9:00-10:00/Latitude x1-x2 and longitude y1-y2 | | | Xn interface-based handover |
| 10:00-10:05/Latitude x3-x4 and longitude y3-y4 | | | N2 interface-based handover |

The first correspondence may be determined by the S-RAN or another access network device or an operator based on the ephemeris information and the satellite constellation. The S-RAN may obtain the first correspondence based on a local configuration or an SLA configuration.

S520: The S-RAN hands over the terminal device to the T-RAN based on the first handover manner.

Specifically, when the handover manner is a handover manner based on an interface between access network devices, the S-RAN may send context information of the terminal device to the T-RAN based on the interface between the access network devices. For example, the S-RAN sends a source to target transparent container (source to target transparent container) to the T-RAN through an Xn interface. The interface between the access network devices is the Xn interface, and the context information of the terminal device is the source to target transparent container.

When the handover manner is a handover manner based on an interface between an access network device and a core network device, the S-RAN sends context information of the terminal device to the T-RAN based on the interface between the access network device and the core network device. For example, the S-RAN sends a source to target transparent container to the T-RAN through an N2 interface.

For example, the S-RAN may send the source to target transparent container to an AMF (an example of the core network device) through the N2 interface, and then the AMF forwards the source to target transparent container to the T-RAN through the N2 interface.

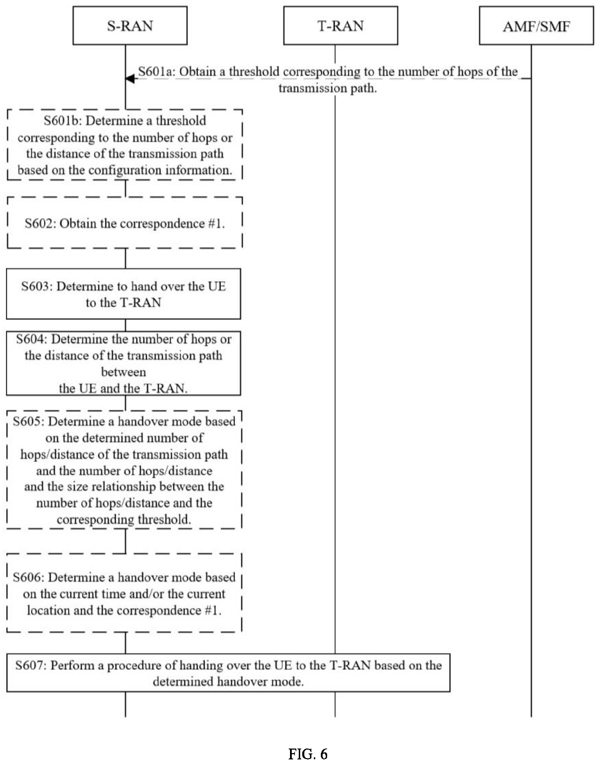

FIG. 6 is a diagram of a communication method 600 according to an embodiment of this application. For example, the method 600 may be considered as a specific implementation of the method 500. The method 600 may include the following several steps.

An S-RAN determines a threshold corresponding to a hop count or a distance of a transmission path.

For example, in S601a, the S-RAN obtains, from an AMF/SMF, the threshold corresponding to the hop count of the transmission path.

Alternatively, in S601b, the S-RAN determines, based on configuration information, the threshold corresponding to the hop count or the distance of the transmission path.

S602: The S-RAN obtains a correspondence (denoted as a correspondence #1, an example of the first correspondence) between time information and/or location information and a handover manner.

For the correspondence #1, refer to the descriptions of the first correspondence in S510.

For example, the S-RAN may determine the correspondence #1 based on a local configuration or an SLA configuration.

S603: The S-RAN determines to hand over UE to a T-RAN.

For a specific manner in which the S-RAN determines to hand over the UE (an example of the terminal device) to the T-RAN, refer to existing related descriptions. For example, the S-RAN may determine, based on signal strength of the UE, location information of the UE, and the like, to hand over the UE to the T-RAN.

After determining to hand over the UE to the T-RAN, the S-RAN may perform S604 and S605, or perform S606.

S604: The S-RAN determines the hop count or the distance of the transmission path between the S-RAN and the T-RAN.

For a specific manner in which the S-RAN determines the hop count or the distance of the transmission path between the S-RAN and the T-RAN, refer to the descriptions in S510.

For example, the S-RAN may determine the hop count of the transmission path between the S-RAN and the T-RAN by using ephemeris information or a topology structure of the transmission path.

S605: The S-RAN determines, based on a value relationship between the determined hop count (distance) of the transmission path and a threshold corresponding to the hop count (distance), a handover manner of handing over the UE to the T-RAN.

For the handover manner, refer to the descriptions of the first handover manner in S510.

For a specific implementation in which the S-RAN determines, based on the determined value relationship between the hop count (distance) of the transmission path and the corresponding threshold, the handover manner of handing over the UE to the T-RAN, refer to descriptions in S510 in which the S-RAN determines, based on the value relationship between the hop count of the transmission path and the threshold #1, to hand over the UE to the T-RAN, and determines, based on the value relationship between the distance of the transmission path and the threshold #2.

S606: The S-RAN determines, based on a current moment and/or a current location and the correspondence #1, a handover manner of handing over the UE to the T-RAN.

For this step, refer to the descriptions in S510 in which the S-RAN determines, based on the time information and/or the location information and the first correspondence, the handover manner of handing over the terminal device to the T-RAN.

S607: The S-RAN performs, based on the determined handover manner, a procedure of handing over the UE to the T-RAN.

For example, when the handover manner is the Xn interface-based handover manner, the procedure may be shown in FIG. 4. When the handover manner is the N2 interface-based handover manner, for the procedure, refer to the foregoing related descriptions of the N2-based handover procedure.

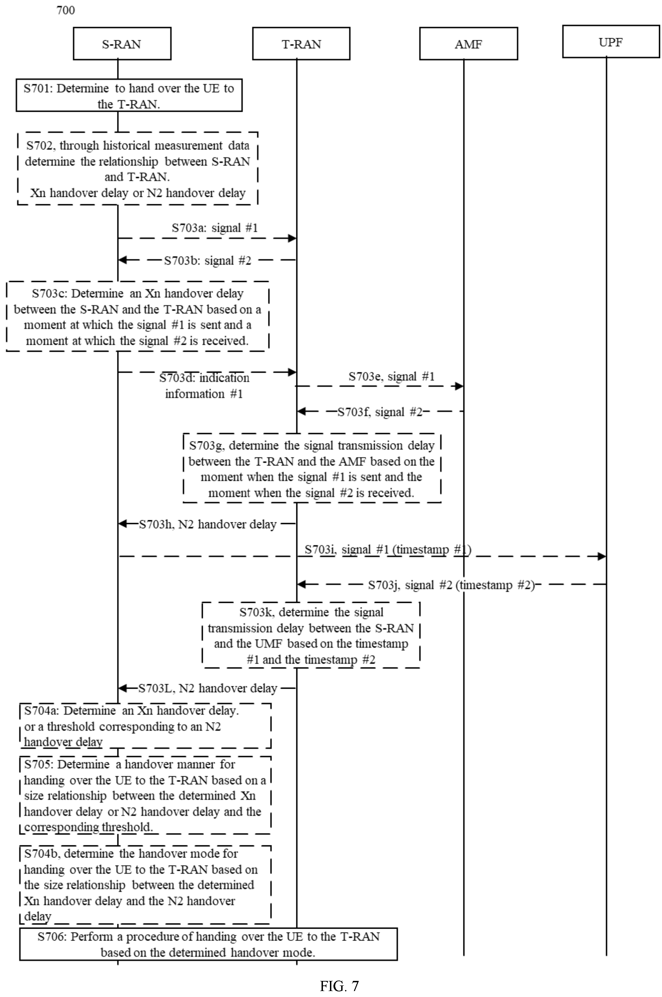

FIG. 7 is a diagram of a communication method 700 according to an embodiment of this application. For example, the method 700 may be considered as a specific implementation of the method 500. The method 700 may include the following several steps.

S701: An S-RAN determines to hand over UE to a T-RAN.

For this step, refer to the descriptions of S601.

The S-RAN determines an Xn-based handover latency or an N2-based handover latency (an example of the latency of the transmission path) between the S-RAN and the T-RAN.

For example, in S702, the S-RAN may determine the Xn-based handover latency or the N2-based handover latency between the S-RAN and the T-RAN by using historical measurement data.

For this step, refer to the descriptions in which the S-RAN determines the latency of the transmission path in S510.

Alternatively, the S-RAN may determine the Xn-based handover latency or the N2-based handover latency between the S-RAN and the T-RAN through measurement.

For example, the S-RAN measures the Xn-based latency in S703a to S703c.

S703a: The S-RAN sends a signal #1 (an example of the measurement signal) to the T-RAN through an Xn interface.

Correspondingly, the T-RAN receives the signal #1 from the S-RAN.

S703b: The T-RAN sends a signal #2 (an example of the response signal) to the S-RAN.

Correspondingly, the S-RAN receives the signal #2 from the T-RAN.

S703c: The S-RAN determines the Xn-based handover latency between the S-RAN and the T-RAN based on a moment at which the signal #1 is sent and a moment at which the signal #2 is received.

Optionally, if the signal #2 carries a timestamp, the S-RAN determines the Xn-based handover latency based on the moment at which the signal #1 is sent and the timestamp.

The S-RAN may measure the Xn-based latency in S703d to S703h, or S703i to S703L.

S703d: The S-RAN sends indication information #1 to the T-RAN.

Correspondingly, the T-RAN receives the indication information #1 from the S-RAN.

The indication information #1 may indicate to measure a signal transmission latency between the T-RAN and an AMF.

S703e: The T-RAN sends a signal #1 (an example of the measurement signal) to the AMF based on the indication information #1.

Correspondingly, the AMF receives the signal #1 from the T-RAN.

S703f: The AMF feeds back a signal #2 to the T-RAN.

Correspondingly, the T-RAN receives the signal #2 from the AMF.

S703g: The T-RAN determines the signal transmission latency (an example of the N2-based handover latency) between the T-RAN and the AMF based on the moment at which the signal #1 is sent and the moment at which the signal #2 is received. Optionally, if the signal #2 carries a timestamp, the T-RAN determines the signal transmission latency based on a moment at which the signal #1 is sent and the timestamp.

S703h: The T-RAN sends the N2-based handover latency to the S-RAN.

Correspondingly, the S-RAN receives the N2-based handover latency from the T-RAN.

Alternatively, in S703i, the S-RAN sends a signal #1 (an example of the measurement signal) to a UPF.

Correspondingly, the UPF receives the signal #1 from the S-RAN.

The signal #1 may carry an identifier of the T-RAN and a timestamp #1.

S703j: The UPF feeds back a signal #2 to the T-RAN.

Correspondingly, the T-RAN receives the signal #2 from the UPF.

The signal #2 may carry an identifier of the S-RAN, the timestamp #1, and a timestamp #2 corresponding to the received signal #1.

S703k: The T-RAN determines a signal transmission latency (denoted as a latency #1) between the S-RAN and the UPF based on the timestamp #1 and the timestamp #2.

It may be understood that, because the signal transmission latency between the S-RAN and the UPF is a latency of the satellite-to-ground link, the latency #1 may be equivalent to the N2-based handover latency.

S703L: The T-RAN sends the latency #1 to the S-RAN.

Correspondingly, the S-RAN receives the latency #1 from the T-RAN.

Optionally, the method further includes S704a and S705, or includes S704b.

S704a: The S-RAN determines a threshold corresponding to the Xn-based handover latency or the N2-based handover latency.

For example, the S-RAN determines, based on configuration information, the threshold corresponding to the Xn-based handover latency or the N2-based handover latency.

This step may be performed at any time before S703. For example, S703a is performed before S701.

S705: The S-RAN determines, based on a value relationship between the determined Xn-based handover latency or N2-based handover latency and the corresponding threshold, a handover manner of handing over the UE to the T-RAN.

For the handover manner, refer to the descriptions of the first handover manner in S510.

For a specific implementation of this step, refer to the descriptions in S510 in which the S-RAN determines, based on the value relationship between the latency of the transmission path and the threshold #3, to hand over the UE to the T-RAN.

S704b: The S-RAN determines, based on the determined Xn-based handover latency and the determined N2-based handover latency, a handover manner of handing over the UE to the T-RAN.

For example, the S-RAN determines, based on a value relationship between the determined Xn-based handover latency and N2-based handover latency, a handover manner of handing over the UE to the T-RAN.

S706: The S-RAN performs, based on the determined handover manner, a procedure of handing over the UE to the T-RAN.

For example, when the handover manner is the Xn interface-based handover manner, the procedure may be shown in FIG. 4. When the handover manner is the N2 interface-based handover manner, for the procedure, refer to the foregoing related descriptions of the N2-based handover procedure.

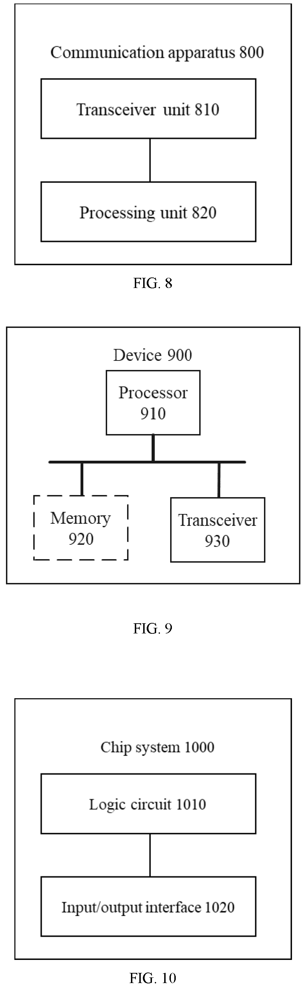

The foregoing describes in detail the communication method provided in embodiments of this application with reference to FIG. 5 to FIG. 7. The following describes in detail communication apparatuses provided in embodiments of this application with reference to FIG. 8 to FIG. 10. It should be understood that descriptions of apparatus embodiments correspond to the descriptions of the method embodiments. Therefore, for content that is not described in detail, refer to the method embodiments. For brevity, details are not described herein again.

FIG. 8 is a diagram of a communication apparatus 800 according to an embodiment of this application. The apparatus 800 includes a transceiver unit 810. The transceiver unit 810 may be configured to implement a corresponding communication function. The transceiver unit 810 may also be referred to as a communication interface or a communication unit.

Optionally, the apparatus 800 may further include a processing unit 820, and the processing unit 820 may be configured to perform data processing.

Optionally, the apparatus 800 further includes a storage unit. The storage unit may be configured to store instructions and/or data. The processing unit 820 may read the instructions and/or the data in the storage unit, to cause the apparatus to implement actions of different devices in the foregoing method embodiments.

In a possible design, the apparatus 800 may be the access network device (for example, the source access network device, the S-RAN, the target access network device, or the T-RAN) in the foregoing embodiment, or may be a component (for example, a chip) of the access network device. The apparatus 800 may implement the steps or procedures performed by the access network device in the foregoing method embodiment. The transceiver unit 810 may be configured to perform a receiving-related operation and a sending-related operation of the access network device in the foregoing method embodiment. The processing unit 820 may be configured to perform a processing-related operation of the access network device in the foregoing method embodiment.

FIG. 9 is a schematic block diagram of a communication apparatus 900 according to an embodiment of this application. The apparatus 900 includes a processor 910, and the processor 910 is coupled to a memory 920. Optionally, the apparatus further includes the memory 920. The memory 920 is configured to store a computer program or instructions and/or data. The processor 910 is configured to execute the computer program or the instructions stored in the memory 920, or read data stored in the memory 920, to perform the method in the foregoing method embodiment.

Optionally, there are one or more processors 910.

Optionally, there are one or more memories 920.

Optionally, the memory 920 and the processor 910 are integrated or separately disposed.

Optionally, as shown in FIG. 9, the apparatus 900 further includes a transceiver 930. The transceiver 930 is configured to receive and/or send a signal. For example, the processor 910 is configured to control the transceiver 930 to receive and/or send a signal. The transceiver 930 may also be referred to as an interface.

In another solution, the apparatus 900 is configured to implement operations performed by the access network device in the foregoing method embodiment.

For example, the processor 910 is configured to execute the computer program or the instructions stored in the memory 920, to implement related operations of the access network device in the foregoing method embodiment.

In an implementation process, steps in the foregoing method may be implemented by using a hardware integrated logical circuit in the processor 910, or by using instructions in a form of software. The method disclosed in embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory 920, and the processor 910 reads information in the memory 920 and completes the steps in the foregoing method in combination with hardware of the processor. To avoid repetition, details are not described herein again.

It should be understood that, in embodiments of this application, the processor may be one or more integrated circuits, and is configured to execute a related program, to perform the method embodiments of this application.

The processor (for example, the processor 910) may include one or more processors and be implemented as a combination of computing devices. The processor may separately include one or more of the following: a microprocessor, a microcontroller, a digital signal processor (digital signal processor, DSP), a digital signal processing device (digital signal processing device, DSPD), an application-specific integrated circuit (application-specific integrated circuit, ASIC), a field programmable gate array (field programmable gate array, FPGA), a programmable logic device (programmable logic device, PLD), gate logic, transistor logic, a discrete hardware circuit, a processing circuit, other appropriate hardware or firmware, and/or another appropriate combination of hardware and software, and is configured to perform various functions described in this disclosure. The processor may be a general-purpose processor or a dedicated processor. For example, the processor 910 may be a baseband processor or a central processing unit. The baseband processor may be configured to process a communication protocol and communication data. The central processing unit may be configured to cause the apparatus to execute a software program and process data in the software program. A part of the processor may further include a nonvolatile random access memory. For example, the processor may further store information of a device type.

The program in this application represents software in a broad sense. A non-limitative example of the software includes program code, a program, a subprogram, instructions, an instruction set, code, a code segment, a software module, an application, a software application, or the like. The program may be run in a processor and/or a computer. In this way, the apparatus is caused to perform various functions and/or processes described in this application.

The memory (for example, the memory 920) may store data required by the processor (for example, the processor 910) during software execution. The memory may be implemented by using any suitable storage technology. For example, the memory may be any available storage medium that can be accessed by the processor and/or the computer. A non-limitative example of the storage medium includes: a random access memory (random access memory, RAM), a read-only memory (read-only memory, ROM), an electrically erasable programmable read-only memory (electrically EPROM, EEPROM), a compact disc read-only memory (Compact Disc-ROM, CD-ROM), a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), a direct rambus random access memory (direct rambus RAM, DR RAM), a removable medium, an optical disc memory, a magnetic disk storage medium, a magnetic storage device, a flash memory, a register, a status memory, a remote mounted memory, a local or remote memory component, or any other medium capable of carrying or storing software, data, or information and accessible by the processor/computer. It should be noted that, the memory described in this specification is intended to include but is not limited to these memories and any other appropriate type of memory.

The memory (for example, the memory 920) and the processor (for example, the processor 910) may be separately disposed or integrated together. The memory may be configured to connect to the processor, so that the processor can read information from the memory, and store the information into the memory and/or write the information into the memory. The memory may be integrated into the processor. The memory and the processor may be disposed in an integrated circuit (for example, the integrated circuit may be disposed in UE or another network node).

FIG. 10 is a schematic block diagram of a chip system 1000 according to an embodiment of this application. The chip system 1000 (or may also be referred to as a processing system) includes a logic circuit 1010 and an input/output interface (input/output interface) 1020.

The logic circuit 1010 may be a processing circuit in the chip system 1000. The logic circuit 1010 may be coupled and connected to a storage unit, and invoke instructions in the storage unit, to cause the chip system 1000 to implement the methods and functions in embodiments of this application. The input/output interface 1020 may be an input/output circuit in the chip system 1000, and outputs information processed by the chip system 1000, or inputs to-be-processed data or signaling information to the chip system 1000 for processing.

In a solution, the chip system 1000 is configured to implement operations performed by the access network device in the foregoing method embodiment.

For example, the logic circuit 1010 is configured to implement a processing-related operation performed by the access network device in the foregoing method embodiment, and the input/output interface 1020 is configured to implement a sending-related operation and/or a receiving-related operation performed by the access network device in the foregoing method embodiment.

An embodiment of this application further provides a computer-readable storage medium. The computer-readable storage medium stores computer instructions for implementing the method performed by the communication apparatus (for example, the source access network device, the S-RAN, the target access network device, or the T-RAN) in the foregoing method embodiment.

An embodiment of this application further provides a computer program product, including instructions. When the instructions are executed by a computer, the method performed by the communication apparatus (for example, the source access network device, the S-RAN, the target access network device, or the T-RAN) in the foregoing method embodiment is implemented.

An embodiment of this application further provides a communication system. The communication system includes at least one of the source access network device and the target access network device in the foregoing embodiment.

For explanations and beneficial effects of related content of any one of the apparatuses provided above, refer to the corresponding method embodiment provided above. Details are not described herein again.

In the several embodiments provided in this application, it should be understood that, the disclosed apparatus and method may be implemented in other manners. For example, the described apparatus embodiment is merely an example. For example, division into the foregoing units is only logical function division and may be other division during an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electronic, mechanical, or other forms.

The foregoing units described as separate parts may or may not be physically separate, and parts displayed as units may or may not be physical units, may be located in one location, or may be distributed on a plurality of network units. Some or all of the units may be selected depending on actual requirements to implement the solutions provided in this application.

In addition, functional units in embodiments of this application may be integrated into one unit, each of the units may exist alone physically, or two or more units may be integrated into one unit.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

When software is used to implement embodiments, all or some of embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. For the computer-readable storage medium, refer to the foregoing descriptions.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
determining, by a source access network device based on first information, to hand over a terminal device to a target access network device in a first handover manner, wherein the first handover manner is a handover manner based on an interface between access network devices or a handover manner based on an interface between an access network device and a core network device; and
handing over the terminal device to the target access network device based on the first handover manner, wherein
the first information comprises at least one of the following: information of a transmission path between the source access network device and the target access network device, time information, or location information of the source access network device.

2. The method according to claim 1, wherein
the handover manner based on the interface between the access network devices is Xn-based handover; or
the handover manner based on the interface between the access network device and the core network device is N2-based handover.

3. The method according to claim 1 or 2, wherein
the interface between the access network devices is an Xn interface; and
the interface between the access network device and the core network device is an N2 interface.

4. The method according to any one of claims 1 to 3, wherein the information of the transmission path comprises at least one of the following:
a hop count of the transmission path, a latency of the transmission path, and a distance of the transmission path.

5. The method according to claim 4, wherein the method further comprises:
determining, by the source access network device, the hop count of the transmission path based on ephemeris information and the time information; or
determining, by the source access network device, the hop count of the transmission path based on a topology structure of the transmission path.

6. The method according to claim 4, wherein the latency of the transmission path comprises:
an Xn-based handover latency and/or an N2-based handover latency from the source access network device to the target access network device stored by the source access network device, or an Xn-based handover latency and/or an N2-based handover latency from the source access network device to the target access network device obtained by the source access network device through measurement.

7. The method according to claim 6, wherein the method further comprises:
measuring, by the source access network device, the Xn-based handover latency and/or the N2-based handover latency from the source access network device to the target access network device.

8. The method according to claim 7, wherein measuring, by the source access network device, the Xn-based handover latency from the source access network device to the target access network device comprises:
sending, by the source access network device, a measurement signal to the target access network device;
receiving, by the source access network device, a response signal from the target access network device, wherein the response signal is sent based on the measurement signal; and
determining, by the source access network device, the Xn-based handover latency based on a moment at which the measurement signal is sent and a moment at which the response signal is received.

9. The method according to claim 7, wherein measuring, by the source access network device, the N2-based handover latency from the source access network device to the target access network device comprises:
sending, by the source access network device, indication information to the target access network device, wherein the indication information indicates to measure an information transmission latency between the target access network device and the core network device; and
receiving, by the source access network device, the N2-based handover latency from the source access network device to the target access network device obtained the target access network device through measurement, wherein the N2-based handover latency is determined based on the information transmission latency.

10. The method according to claim 7, wherein measuring, by the source access network device, the N2-based handover latency from the source access network device to the target access network device comprises:
sending, by the source access network device, a measurement signal to the core network device, wherein the measurement signal comprises an identifier of the target access network device and a first timestamp;
receiving, by the source access network device, a response signal from the core network device via the target access network device, wherein the response signal comprises a second timestamp; and
obtaining the N2-based handover latency from the source access network device to the target access network device through measurement based on the first timestamp and the first timestamp.

11. The method according to any one of claims 6 to 10, wherein when the latency of the transmission path comprises the Xn-based handover latency and the N2-based handover latency from the source access network device to the target access network device measured by the source access network device, determining, by the source access network device based on the first information, the manner of handing over the terminal device to the target access network device comprises:
if the Xn-based handover latency is greater than the N2-based handover latency, determining that the first handover manner is a handover manner based on the interface between the access network device and the core network device; or
if the Xn-based handover latency is less than or equal to the N2-based handover latency, determining that the first handover manner is a handover manner based on the interface between the access network devices.

12. The method according to any one of claims 1 to 10, wherein when the first information comprises the time information, or the location information of the source access network device, determining, by the source access network device based on the first information, to hand over the terminal device to the target access network device in the first handover manner comprises:
determining, by the source access network device based on the first information and a first correspondence, to hand over the terminal device to the target access network device in the first handover manner, wherein the first correspondence comprises a correspondence between the time information and/or the location information and the handover manner.

13. The method according to any one of claims 1 to 10, wherein when the first information comprises the information of the transmission path between the source access network device and the target access network device, determining, by the source access network device based on the first information, to hand over the terminal device to the target access network device in the first handover manner comprises:
determining, by the source access network device based on the information of the transmission path and a threshold corresponding to the information of the transmission path, to hand over the terminal device to the target access network device in the first handover manner.

14. The method according to claim 13, wherein determining, by the source access network device based on the information of the transmission path and the threshold corresponding to the information of the transmission path, to hand over the terminal device to the target access network device in the first handover manner comprises:
if the information of the transmission path is greater than the threshold corresponding to the information of the transmission path, determining that the first handover manner is a handover manner based on the interface between the access network device and the core network device; or
if the information of the transmission path is less than or equal to the threshold corresponding to the information of the transmission path, determining that the first handover manner is a handover manner based on the interface between the access network devices.

15. The method according to any one of claims 1 to 14, wherein when the handover manner is a handover manner based on the interface between the access network device and the core network device, handing over the terminal device to the target access network device based on the first handover manner comprises:
sending, by the source access network device through the interface, context information of the terminal device to the core network device.

16. The method according to any one of claims 1 to 14, wherein when the handover manner is a handover manner based on the interface between the access network devices, handing over the terminal device to the target access network device based on the first handover manner comprises:
sending, by the source access network device through the interface, context information of the terminal device to the target access network device.

17. The method according to any one of claims 1 to 16, wherein the source access network device and the target access network device are deployed on different satellites.

18. A communication apparatus, comprising a processing unit, wherein
the processing unit is configured to determine, based on first information, to hand over a terminal device to a target access network device in a first handover manner, wherein the first handover manner is a handover manner based on an interface between access network devices or a handover manner based on an interface between an access network device and a core network device; and
the processing unit is further configured to hand over the terminal device to the target access network device based on the first handover manner, wherein
the first information comprises at least one of the following: information of a transmission path between the apparatus and the target access network device, time information, or location information of the apparatus.

19. The apparatus according to claim 18, wherein
the handover manner based on the interface between the access network devices is Xn-based handover; or
the handover manner based on the interface between the access network device and the core network device is N2-based handover.

20. The apparatus according to claim 18 or 19, wherein
the interface between the access network devices is an Xn interface; and
the interface between the access network device and the core network device is an N2 interface.

21. The apparatus according to any one of claims 18 to 20, wherein the information of the transmission path comprises at least one of the following:
a hop count of the transmission path, a latency of the transmission path, and a distance of the transmission path.

22. The apparatus according to claim 21, wherein the processing unit is further configured to:
determine the hop count of the transmission path based on ephemeris information and the time information; or
determine the hop count of the transmission path based on a topology structure of the transmission path.

23. The apparatus according to claim 21, wherein the latency of the transmission path comprises:
an Xn-based handover latency and/or an N2-based handover latency from the apparatus to the target access network device stored by the apparatus, or an Xn-based handover latency and/or an N2-based handover latency from the apparatus to the target access network device obtained by the processing unit through measurement.

24. The apparatus according to claim 23, wherein the processing unit is further configured to:
measure the Xn-based handover latency and/or the N2-based handover latency from the apparatus to the target access network device.

25. The apparatus according to claim 24, wherein the apparatus further comprises a transceiver unit, wherein
the transceiver unit is configured to send a measurement signal to the target access network device;
the transceiver unit is further configured to receive a response signal from the target access network device, wherein the response signal is sent based on the measurement signal; and
the processing unit is specifically configured to determine the Xn-based handover latency based on a moment at which the measurement signal is sent and a moment at which the response signal is received.

26. The apparatus according to claim 24, wherein the apparatus further comprises a transceiver unit, wherein
the transceiver unit is configured to send indication information to the target access network device, wherein the indication information indicates to measure an information transmission latency between the target access network device and the core network device; and
the transceiver unit is further configured to receive the N2-based handover latency from the apparatus to the target access network device obtained by the target access network device through measurement, wherein the N2-based handover latency is determined based on the information transmission latency.

27. The apparatus according to claim 24, wherein the apparatus further comprises a transceiver unit, wherein
the transceiver unit is configured to send a measurement signal to the core network device, wherein the measurement signal comprises an identifier of the target access network device and a first timestamp;
the transceiver unit is further configured to receive a response signal from the core network device via the target access network device, wherein the response signal comprises a second timestamp; and
the processing unit is specifically configured to obtain the N2-based handover latency from the apparatus to the target access network device through measurement based on the first timestamp and the first timestamp.

28. The apparatus according to any one of claims 23 to 27, wherein when the latency of the transmission path comprises the Xn-based handover latency and the N2-based handover latency from the apparatus to the target access network device obtained by the processing unit through measurement, the processing unit is specifically configured to:
if the Xn-based handover latency is greater than the N2-based handover latency, determine that the first handover manner is a handover manner based on the interface between the access network device and the core network device; or
if the Xn-based handover latency is less than or equal to the N2-based handover latency, determine that the first handover manner is a handover manner based on the interface between the access network devices.

29. The apparatus according to any one of claims 18 to 27, wherein when the first information comprises the time information, or the location information of the apparatus, the processing unit is specifically configured to:
determine, based on the first information and a first correspondence, to hand over the terminal device to the target access network device in the first handover manner, wherein the first correspondence comprises a correspondence between the time information and/or the location information and the handover manner.

30. The apparatus according to any one of claims 18 to 27, wherein when the first information comprises the information of the transmission path between the apparatus and the target access network device, the processing unit is specifically configured to:
determine, based on the information of the transmission path and a threshold corresponding to the information of the transmission path, to hand over the terminal device to the target access network device in the first handover manner.

31. The apparatus according to claim 30, wherein the processing unit is specifically configured to:
if the information of the transmission path is greater than the threshold corresponding to the information of the transmission path, determine that the first handover manner is a handover manner based on the interface between the access network device and the core network device; or
if the information of the transmission path is less than or equal to the threshold corresponding to the information of the transmission path, determine that the first handover manner is a handover manner based on the interface between the access network devices.

32. The apparatus according to any one of claims 18 to 31, wherein when the handover manner is a handover manner based on the interface between the access network device and the core network device, the processing unit is specifically configured to:
determine to send, through the interface, context information of the terminal device to the core network device.

33. The apparatus according to any one of claims 18 to 31, wherein when the handover manner is a handover manner based on the interface between the access network devices, the processing unit is specifically configured to:
determine to send, through the interface, context information of the terminal device to the target access network device.

34. A communication apparatus, wherein the apparatus comprises a unit configured to perform the apparatus according to any one of claims 1 to 17.

35. A communication apparatus, comprising:
a processor and a memory, wherein the processor is coupled to the memory; and
the memory stores instructions, and when the instructions are run by the processor, the apparatus is caused to perform the method according to any one of claims 1 to 17.

36. A computer-readable storage medium, wherein the computer-readable storage medium is configured to store a computer program; and when the computer program is run on a computer, the computer is caused to perform the method according to any one of claims 1 to 17.

37. A computer program product, wherein the computer program product comprises computer program code, and when the computer program code is run by a communication apparatus, the method according to any one of claims 1 to 17 is implemented.

38. A communication system, comprising an access network device, wherein the access network device is configured to perform the method according to any one of claims 1 to 17.
